Europäisches Patentamt

European Patent Office

Office européen des brevets

(19)

(11) **EP 0 554 495 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int Cl.$^6$: **H04N 5/44**

(21) Anmeldenummer: **92102095.4**

(22) Anmeldetag: **07.02.1992**

(54) **Verfahren und Schaltungsanordnung zur bewegungsvektorgestützten Flimmerreduktion bei einem Fernsehempfänger**

Method and circuit arrangement for flicker reduction based on motion vector in a television receiver

Méthode et configuration de circuit pour la réduction du scintillement basée sur le vecteur de mouvement dans un récepteur de télévision

(84) Benannte Vertragsstaaten:
**DE ES FR GB IT**

(43) Veröffentlichungstag der Anmeldung:
**11.08.1993 Patentblatt 1993/32**

(73) Patentinhaber: **SIEMENS AKTIENGESELLSCHAFT**
**D-80333 München (DE)**

(72) Erfinder:
• **Bottek, Martin**
**W-4600 Dortmund (DE)**
• **Schröder, Hartmut, Dr.-Ing.**
**W-4600 Dortmund 50 (DE)**

(56) Entgegenhaltungen:
**EP-A- 0 339 365**

• **SIGNAL PROCESSING OF HDTV,II,30-08/01-09-89,TURIN(IT) 'G.FERNANDO ET AL:MOTION COMPENSATED DISPLAY FIELD RATE CONVERSION OF BANDWIDTH COMPRESSED HD-MAC PICTURES,P643-648'**
• **SIGNAL PROCESSING OF HDTV,II,30-08/01-09-89,TURIN(IT) 'M.HAGHIRI ET AL:A MOTION COMPENSATED FIELD RATE CONVERSION ALGORITHM,P 649-655'**
• **NTZ ARCHIV Bd. 7, Nr. 9, September 1985, BERLIN DE Seiten 219 - 229 CH.HENTSCHEL 'FLIMMERREDUKTIONSVERFAHREN ZUR VERBESSERUNG DER FERNSEH-BILDWIEDERGABE'**

## Beschreibung

Signalverarbeitungsverfahren, die auf der Verwendung von Bildspeichern beruhen, erlauben eine Reduktion der durch das in üblichen und zukünftigen TV-Systemen eingesetzte Zeilensprungabtastverfahren verursachten systembedingten Flimmerstörungen wie Großflächenflimmern, Zeilenflimmern, Zeilenwandern, Kanten- und Detailflimmern.

Es sind eine Reihe von linearen Interpolationsverfahren zur flimmerfreien Wiedergabe mit 100 Hz-Teilbildfrequenz bekannt, deren Leistungsfähigkeit im Vergleich zueinander, beispielsweise in den Zeitschriften "Fernseh- und Kinotechnik, 40. Jahrgang, Nr. 4/1986, Seiten 134 bis 139" oder "Rundfunktechnische Mitteilungen, Jahrgang 31 (1987), Heft 2, Seiten 75 bis 82" ausführlich beschrieben sind. Diese Vergleichsbetrachtungen zeigen deutlich, daß auch eine Kombination dieser Verfahren über eine Bewegungsdetektion nur ungenügende Auflösungseigenschaften insbesondere in schnell bewegten Bildbereichen zu erzielen in der Lage ist.

Bessere Resultate lassen sich mit Techniken erzielen, die auf der Berücksichtigung der in der Bildszene vorhandenen Bewegung nach Betrag und Richtung basieren, wie sie beispielsweise in dem Tagungsband "International Broadcast Convention IBC '90, Seite 321 folgende, IEE Conference Publication 327, IEE, London, 1990" beschrieben sind: Bewegte Objekte können so in den zu interpolierenden Zwischenbildern an einem ihrer Bewegung entsprechenden Ort dargestellt werden.

Bisher bekannte Techniken, die auf der Verwendung von Bewegungsvektoren (aus dem Bildsignal im Empfänger geschätzt oder zusammen mit dem Bildsignal übermittelt) beruhen, sind jedoch besonders empfindlich in Bezug auf eine Fehlschätzung der Bewegungsvektoren, was gravierende Folgen hat, da in vielen Bildszenen falsche Bewegungsvektoren ermittelt werden oder die Schätzung ganz versagt.

Interpolationsverfahren, die von solchen Bewegungsvektoren Gebrauch machen, tragen dieser Tatsache dadurch Rechnung, daß die zu ermittelnde Bewegung nicht nur durch eine einfache Verschiebung realisiert wird, sondern daß die Bildsignale auch aus einer Mittelung entsprechend verschobener Bildinhalte hervorgehen. Daraus resultiert im Falle ruhender oder nur langsam bewegter Bildbereiche infolge der dann einsetzenden einfachen zeitlichen Mittelung eine ungenügende Reduktion von Detailflimmerstörungen sowie eine unzufriedenstellende Qualität im Falle des Versagens der Schätzung.

Aus der EP 0 339 365 A2 ist es bekannt, zur Reduktion von systembedingten Zeilenflimmerstörungen bei Zeilensprungwiedergabe im Fernsehempfänger durch eine vertikale Filterung die im Bildspeicher gespeicherten Signale in ihre bezüglich der Ortsfrequenz hochfrequenten und niederfrequenten Anteile aufzuteilen, für diese eine unterschiedliche, auf der Verwendung eines Bewegungsdetektors basierende Signalverarbeitung durchzuführen und die verarbeiteten Signale mit doppelter Vertikalfrequenz im Zeilensprung wiederzugeben. Bei sich schnell bewegenden Objekten, besonders bei solchen mit großen Abmessungen, ergeben sich jedoch deutlich sichtbare Artefakte, beispielsweise in Form einer Sägezahnstruktur.

Das der Erfindung zugrunde liegende Problem besteht also darin, ein Verfahren und eine Schaltungsanordnung zur Durchführung eines Verfahrens zur bewegungsvektorgestützten Flimmerreduktion bei einem Fernsehempfänger anzugeben, bei dem eine weitgehende Beseitigung von Detailflimmerstörungen in ruhenden und langsam bewegten Bildteilen sowie beim Versagen der Schätzung von Bewegungsvektoren möglich ist, ohne die Anforderungen an die Qualität der Bewegungsschätzung wesentlich zu erhöhen.

Das Problem wird durch ein Verfahren gemäß Anspruch 1 und einer Schaltungsanordnung gemäß Anspruch 11 gelöst.

Dem erfindungsgemäßen Verfahren liegt die Erkenntnis zugrunde, daß Detailflimmereffekte vorwiegend durch bezogen auf die vertikale Ortsfrequenz hochfrequente Anteile des Fernsehsignals bzw. der Halbbilder, aus denen das Fernsehsignal zusammengesetzt ist, verursacht werden. Durch die räumliche Filterung der im Bildspeicher gespeicherten Signale kann nun für die so erhaltenen hochfrequenten und niederfrequenten Anteile des Fernsehsignals eine Signalverarbeitung derart durchgeführt werden, daß die hochfrequenten Anteile - gestützt auf Bewegungsvektoren - zeilenflimmerfrei und annähernd bewegungsrichtig und die niederfrequenten Anteile - ebenfalls gestützt auf Bewegungsvektoren - bewegungsrichtig mit der doppelten Vertikalfrequenz wiedergegeben werden.

Die für das Verfahren benötigten Bewegungsvektoren werden vorzugsweise durch einen im Fernsehempfänger enthaltenen Bewegungsschätzer ermittelt. Sie können jedoch auch empfangen werden, sofern sie mit dem Fernsehsignal übermittelt werden. Es ist aber auch möglich, die Bewegungsvektoren aus einer Kombination dieser beiden Verfahren zu ermitteln. Besonders im Hinblick auf zukünftige Fernsehsysteme erhöhter Bildqualität (HD-MAC, PALplus) ist die Möglichkeit, die zur bewegungsabhängigen Steuerung des Signalverarbeitungsprozesses notwendigen Daten aus zusammen mit dem Bildsignal übertragenen Zusatzinformation ableiten zu können, von großer Bedeutung, da hierdurch der Signalverarbeitungsaufwand im Empfänger deutlich reduziert werden kann; die sonst notwendigen Schaltungen zur Bewegungsdetektion oder -schätzung können dann sogar entfallen.

Im Falle des Versagens der Bewegungsschätzung werden bewegte Objekte durch den niederfrequenten Anteil des Fernsehsignals in ihren wesentlichen Begrenzungen weitgehend bewegungsrichtig dargestellt, die hochfrequenten Anteile werden annähernd mit der Qualität eines progressiv abgetasteten Vollbildes angeboten, das heißt es wird eine detailflimmerfreie Bildwiedergabe erreicht.

Die Flimmerreduktionsverfahren bieten im Falle des völligen Versagens der Bewegungsschätzung eine leicht erhöhte Rückfallqualität, jedoch ist hier gleichzeitig eine erhöhte Empfindlichkeit gegenüber Ungenauigkeiten und groben Fehlern bei der Bewegungsschätzung gegeben.

Die erfindungsgemäßen Flimmerreduktionsverfahren erfordern einen geringen Signalverarbeitungsaufwand, da hier in Fällen des Versagens der Bewegungsschätzung das Umschalten auf den Rückfallmodus durch Setzen des Nullvektors erfolgen kann, ohne daß die Bildqualität gravierend verschlechtert wird.

Das Flimmerreduktionsverfahren nach Anspruch 10 ergibt bei kleinen und mittleren Geschwindigkeiten eine erhöhte Rückfallqualität. Durch eine einfache Bewegungsdetektion ist es hier möglich, bewegte und unbewegte Bildteile zu unterscheiden und so zusätzliche Bewegungsstörungen zu vermeiden.

Die Schaltungsanordnung nach Anspruch 12 erfordert einen geringen Schaltungsaufwand für die Komponenten, die die arithmetischen Operationen zur Signalverarbeitung durchführen, allerdings ist hier die Anzahl der einzusetzenden Bildspeicher erhöht.

Dem gegenüber erlaubt eine Schaltungsanordnung nach Anspruch 11 eine Halbierung des Speicheraufwandes, da hier die Aufteilung in hochfrequente und niederfrequente Anteile erst nach der Speicherung erfolgt. Jedoch sind die arithmetischen Operationen jetzt mit doppelter Geschwindigkeit durchzuführen.

Die Erfindung wird im folgenden anhand von Ausführungsbeispielen mit Hilfe von Zeichnungen näher erläutert. Es zeigen::

Figur 1      das Blockschaltbild der prinzipiellen Ausführungsform für das erfindungsgemäße Verfahren,

Figur 2      schematisch die Signalverarbeitung für die niederfrequenten Anteile des Fernsehsignals mit vektorgestützter zeitlicher Mittelung,

Figur 3      schematisch die Signalverarbeitung für die hochfrequenten Anteile des Fernsehsignals mit vektorgestützter Halbbildeinfügung,

Figur 4      schematisch die Signalverarbeitung für die niederfrequenten Anteile des Fernsehsignals mit vektorgestützter Halbbildverschiebung,

Figur 5      das Blockschaltbild einer Ausführungsform mit getrennter Speicherung der hochfrequenten und niederfrequenten Anteile,

Figur 6      das Blockschaltbild einer Ausführungsform mit gemeinsamer Speicherung der hochfrequenten und niederfrequenten Anteile.

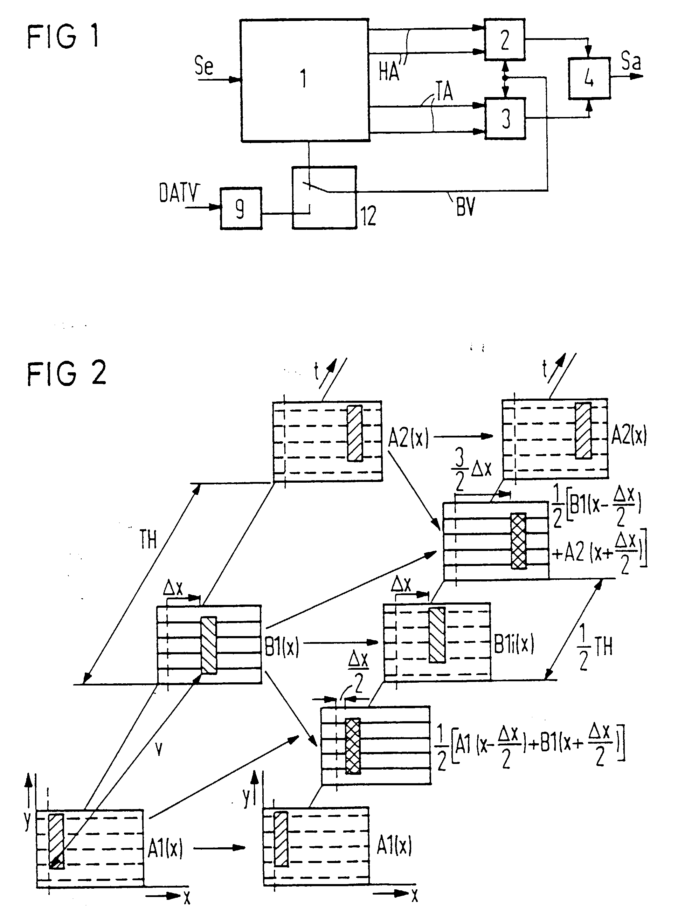

Das aus den Halbbildern A, B bestehende Fernsehsignal Se wird gemäß Figur 1 einer Speicher- und Filtereinrichtung 1 zugeführt. Dort wird es entweder halbbildweise zwischengespeichert und anschließend mittels eines räumlich wirkenden Filters in seine bezüglich der Ortsfrequenz hochfrequenten Anteile HA und niederfrequenten Anteile TA aufgeteilt, oder es wird zuerst gefiltert und dann werden die hochfrequenten und niederfrequenten Anteile HA, TA zwischengespeichert. Das räumlich wirkende Filter ist dabei ein Filter, mit dem sowohl eine vertikale oder horizontale Filterung eines in einem Bildspeicher abgespeicherten Signals als auch eine beliebige Kombination dieser Filterungsmethoden durchgeführt werden kann.

Die hochfrequenten Fernsehsignalanteile HA werden einem ersten Prozessor 2 zugeführt und die niederfrequenten Anteile TA einem zweiten Prozessor 3. Die Verarbeitung erfolgt unter Verwendung von Bewegungsvektoren BV. Diese Bewegungsvektoren BV werden entweder in der Speicher- und Filtereinrichtung 1 aus dem Fernsehsignal Se ermittelt oder aus einem eventuell zusammen mit dem Fernsehsignal Se empfangenen Zusatzsignal DATV erzeugt und über einen Schalter 12 jeweils den beiden Prozessoren 2, 3 zugeführt. Die von den Prozessoren 2, 3 verabeiteten Signale werden einer Mischereinrichtung 4 zugeführt, wo sie wieder zusammengemischt werden, um anschließend mit der doppelten Vertikalfrequenz wiedergegeben werden zu können.

Zur flimmerfreien Wiedergabe eines Fernsehsignals mit der doppelten Vertikalfrequenz nach dem Zeilensprungverfahren ist es notwendig, aus den empfangenen Halbbildern A, B Zwischenbilder durch Interpolation zu erzeugen. Eine solche Interpolation läßt sich bei hohen Qualitätsanforderungen nur unter geeigneter Berücksichtigung der im Bild auftretenden Bewegungen durchführen. Bisher bekannte lineare Verfahren ohne Berücksichtigung von Bewegungen führen zu sichtbaren Bewegungsverschleifungen; zum Beispiel führt eine einfache zeitliche Mittelwertbildung nach dem Schema $A1, \frac{1}{2}(A1i + B1), B1i, \frac{1}{2}(B1 + A2i)$ zu einem sichtbaren Auflösungsverlust. Bei dem beschriebenem Schema bedeutet A1 das erste Halbbild eines ersten Vollbilds und B1 das zweite, im Raster um eine Zeile versetzte Halbbild eines ersten Vollbilds. A2 ist dann das erste Halbbild eines zweiten Vollbildes. Der Buchstabe i bedeutet dabei eine Versetzung eines Halbbildes in das Bildraster des jeweils anderen Halbbilds: A1i wird also im Raster von B1 dargestellt, wozu im allgemeinen eine vertikale Interpolationsfilterung Verwendung findet.

Eine Berücksichtigung der auftretenden Bewegungen nach Betrag und Richtung kann jedoch, bei einem Einsatz im Empfänger nur mit aufwandgünstigen Methoden zur Bewegungsschätzung, die Vektoren nur mit begrenzter Genauigkeit und zuverlässig liefern, erfolgen. Die Interpolationsverfahren, die von solchermaßen erzeugten Vektoren Gebrauch machen sollen, müssen diesem Sachverhalt Rechnung tragen.

Das ist beispielsweise für ein Verfahren mit vektorgestützter zeitlicher Mittelung, wie es in Figur 2 dargestellt ist, gegeben. Die interpolierte Halbbildfolge ergibt sich mit Hilfe der gemessenen Verschiebung $\Delta x$ von Halbbild A1 zu Halbbild B1, die im zeitlichen Abstand TH aufeinanderfolgen, des Eingangssignals Se zu A1 (x), $\frac{1}{2}(A1(x - \frac{\Delta x}{2})) + B1(x + \frac{\Delta x}{2}))$, B1i(x), $\frac{1}{2}(B1(x - \frac{\Delta x}{2}) + A2 (x + \frac{\Delta x}{2})$. Der Einfachheit halber ist hier nur ein eindimensionaler Vektor x und eine eindimensionale Verschiebung $\Delta x$ beschrieben. Die hier beschriebenen Verfahren gelten jedoch ganz allgemein für einen zweidimensionalen Vektor $\vec{x}$ und eine zweidimensionale Verschiebung $\vec{\Delta x}$. Die interpolierten Zwischenbilder sind dabei durch eine Mittelung entsprechend verschobener Bildinhalte benachbarter Teilbilder A1, B1 entstanden. Leichte Fehler bei der Bewegungsschätzung (Abweichungen zur wahren Bewegung) sind bei diesem Interpolationsverfahren tolerierbar, da hier nur ein Schärfeverlust auftritt, aber keine völlig falsche Bewegungsdarstellung vorgenommen wird. Im Fall nicht kompensierbarer Bewegungsabläufe oder eines völligen Versagens der Bewegungsschätzung, was als Rückfall-Modus bezeichnet wird, kann durch Setzen eines Nullvektors ein Ausfall der Interpolation vermieden werden. In diesem Fall ist eine einfache zeitliche Mittelung, wie oben beschrieben, wirksam. Im Falle langsamer Bewegungen oder ruhender Bildinhalte, ist dagegen durch die dann ebenfalls einsetzende, einfache zeitliche Mittelwertbildung nur eine wenig zufriedenstellende Detailflimmerreduktion möglich.

Es hat sich gezeigt, daß ein lineares Interpolationsverfahren mit Trennung der hochfrequenten und niederfrequenten Fernsehsignalanteile, bei dem die niederfrequenten Anteile aus einer einfachen zeitlichen Mittelung, die hochfrequenten Anteile aus einer flimmerfreien Bildwiederholung in der Reihenfolge A1, B1, A1, B1 hervorgehen, hierfür überlegen ist.

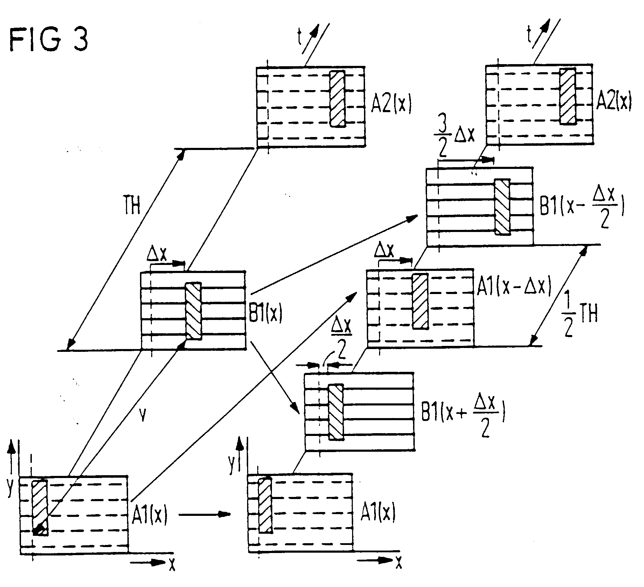

Bei einer erfindungsgemäßen Einbettung dieses bekannten Verfahrens in eine Umgebung mit bewegungsvektorgestützter Signalverarbeitung gemäß Figur 1 werden hochfrequente und-niederfrequente Signalanteile getrennten Interpolationsverfahren unterzogen. Die niederfrequenten Anteile werden einer vektorgestützten zeitlichen Mittelung gemäß Figur 2 unterzogen, die hochfrequenten Anteile werden jetzt entsprechend einem ermittelten Bewegungsvektor $\Delta x$ verschoben, so daß eine flimmerfreie Ausgangsbildfolge gemäß Figur 3 entsteht: A1(x), B1(x + $\frac{\Delta x}{2}$), A1(x -$\Delta x$), B1(x - $\frac{\Delta x}{2}$). Da der hochfrequente Anteil für die Positionierung eines bewegten Objektes durch das menschliche Auge nur in geringem Umfang (gegenüber dem niederfrequenten Anteil) verantwortlich ist, bleiben Ungenauigkeiten und Fehler im geschätzten Vektorfeld weiterhin gut tolerierbar. Für ein solches Interpolationsverfahren gilt im Falle langsam bewegter oder ruhender Bildinhalte, daß durch das dann einsetzende lineare Interpolationsverfahren mit Trennung der hochfrequenten und niederfrequenten Signalanteile eine erhöhte Bildqualität gegenüber herkömmlichen Verfahren mit geringer Detailflimmerreduktion erzielt wird.

Der Einsatz eines Interpolationsverfahrens mit Trennung der hochfrequenten und niederfrequenten Signalanteile kann jedoch auch mit einem veränderten Interpolationsverfahren für die niederfrequenten Signalanteile erfolgen. Statt der zeitlichen Mittelung gemäß Figur 2 kann auch eine Halbbildwiederholung mit der Reihenfolge A1, A1i, B1i, B1 für die interpolierte Sequenz durchgeführt werden. Auch hier bedeutet der Buchstabe i eine Verschiebung eines Halbbilds in das Raster des jeweils anderen Halbbilds.

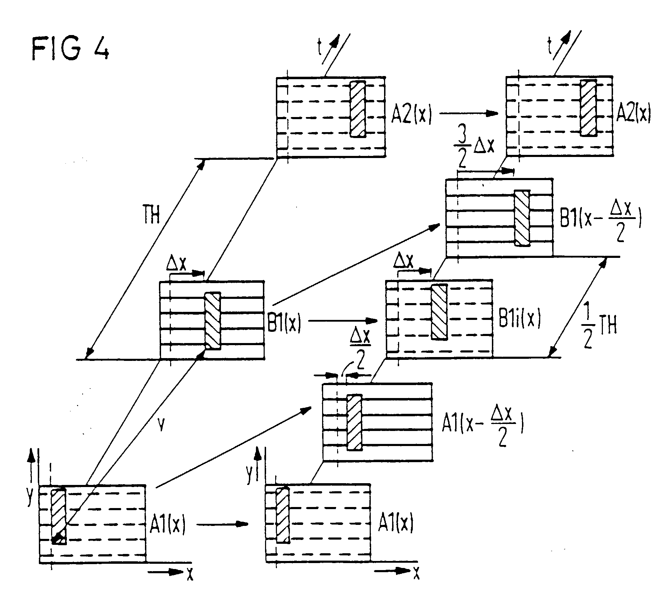

Es ergibt sich daraus dann ein modifiziertes Interpolationsverfahren mit vektorgestützter Halbbildverschiebung, wie sie in Figur 4 dargestellt ist: A1(x), A1(x $\frac{\Delta x}{2}$), B1i(x), B1(x - $\frac{\Delta x}{2}$).

Es resultiert hieraus eine leicht erhöhte Rückfallqualität, jedoch ist gleichzeitig eine erhöhte Empfindlichkeit dieses Interpolationsverfahrens gegenüber fehlerhaften Schätzergebnissen gegeben, da hier Bildanteile in Richtung einer geschätzten Bewegung einfach verschoben werden.

Dies gilt in gleicher Weise auch für eine Interpolation der niederfrequenten Signalanteile mit einer Ausgangsbildfolge A1', A1'i, B1'i, B1', bei der durch eine Mittelung benachbarter Zeilen der niederfrequenten Signale eine vertikale Interpolation vorgenommen wird. Hier ist zwar die Vertikalauflösung im Rückfallmodus gegenüber einer Halbbildfolge gemäß Figur 4 reduziert, jedoch tritt das verbleibende Detailflimmern geringer in Erscheinung. Es ergibt sich hier das folgende Bildungsgesetz für ein vektorgestütztes Interpolationsverfahren: A1'(x), A1'i(x - $\frac{\Delta x}{2}$), B1'i(x), B1'(x - $\frac{\Delta x}{2}$).

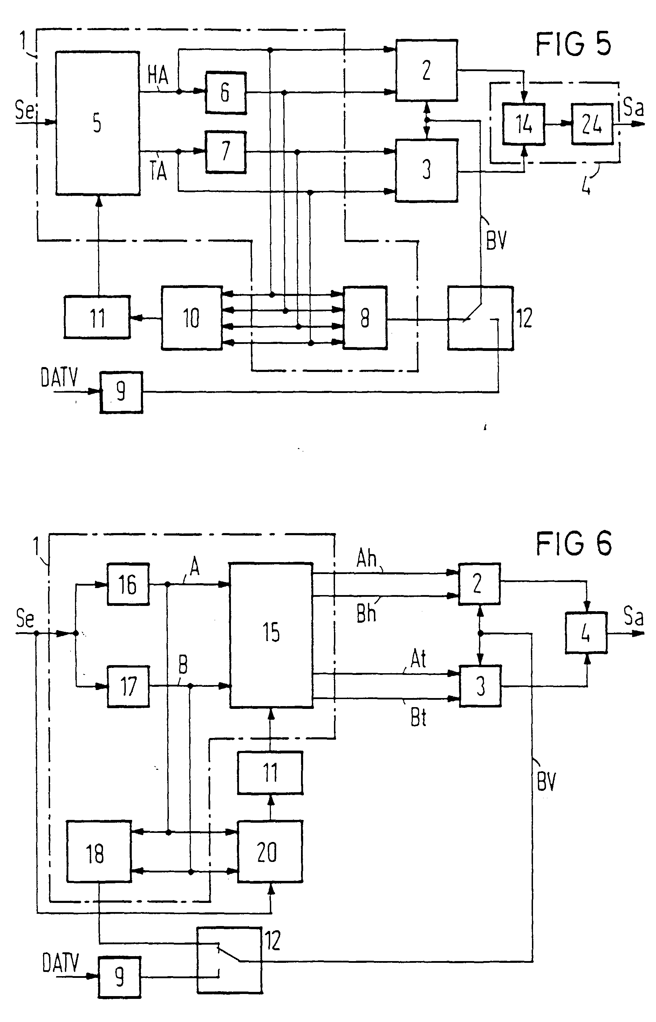

Figur 5 zeigt eine erste mögliche, detailliertere Schaltungsanordnung zur Durchführung der beschriebenen Verfahren. Entsprechend der Schaltungsanordnung gemäß Figur 1 wird das aus den Halbbildern A, B bestehende Fernsehsignal Se einer Speicher-und Filtereinrichtung 1 zugeführt. Die Speicher- und Filtereinrichtung 1 ist dabei mit einer Filterschaltung 5, deren Eingang den Eingang der Speicher- und Filtereinrichtung bildet, zwei Bildspeichern 6 und 7 und einem Bewegungsschätzer 8 gebildet. Das Fernsehsignal Se wird durch die Filterschaltung 5 in seine hochfrequenten und niederfrequenten Anteil HA und TA aufgeteilt, die zum einen direkt zum Ausgang der Speicher- und Filtereinrichtung 1 geführt werden, zum anderen in den Bildspeichern 6 bzw. 7 zwischengespeichert werden und erst nach Verzögerung um eine Halbbilddauer TH dem Ausgang der Speicher-und Filtereinrichtung 1 zugeführt werden. Da das Fernsehsignal Se aus hintereinanderfolgenden Halbbildern A und B besteht, bestehen auch die hochfrequenten und niederfrequenten Signalanteile HA und TA aus hochfrequenten und niederfrequenten Halbbildfolgen. Sowohl der Bewegungsschätzer 8, dem die Ausgangssignale der Speicher- und Filtereinrichtung 1 zugeführt werden, als auch die beiden Prozessoren 2 und 3 benötigen jedoch jeweils gleichzeitig beide Halbbilder, sowohl für den hochfrequenten Signalanteil HA als auch für den niederfrequenten Signalanteil TA. Deshalb muß jeweils eines der beiden Halbbilder, sowohl im hochfrequenten als auch im niederfrequenten Kanal mittels eines Bildspeichers 6 bzw. 7 um eine Halbbilddauer TH verzögert werden.

Die hochfrequenten Signalanteile HA werden dann im ersten Prozessor 2 und die niederfrequenten Signalanteile TA im zweiten Prozessor 3 mit Hilfe von Bewegungsvektoren BV nach einem der oben beschriebenen Interpolationsverfahren verarbeitet und anschließend in einem Addierer 14 wieder zusammengeführt. Die Bewegungsvektoren BV werden dabei entweder vom Bewegungsschätzer 8 ermittelt oder mittels einer Vektornachverarbeitungsschaltung 9 aus einem, mit dem Fernsehsignal Se empfangbaren Zusatzsignal DATV ermittelt. Ein Schalter 12 dient dabei der Auswahl einer der beiden Möglichkeiten. Bei dieser Schaltungsanordnung ist die Filterung und Verarbeitung der Signale bei der Eingangstaktfrequenz durchzuführen, jedoch ist hier ein dritter Bildspeicher 24 nötig, um die Umsetzung auf die doppelte Vertikalfrequenz zu ermöglichen.

Im Gegensatz dazu findet bei der Schaltungsanordnung nach Figur 6 die Signalverarbeitung bei der doppelten Eingangstaktfrequenz statt, so daß kein dritter Bildspeicher nötig ist. Bei dieser Schaltungsanordnung wird das Fernsehsignal Se zwei, dem Eingang der Speicher- und Filtereinrichtung 1 zugeordneten Bildspeichern 16 und 17 zugeführt. Das Halbbild A wird dabei in dem Bildspeicher 16 und das Halbbild B in dem Bildspeicher 17 zwischengespeichert und anschließend sowohl dem Bewegungsschätzer 18 als auch der Filterschaltung 15 zugeführt, wobei die Halbbilder A, B mit der doppelten Eingangstaktfrequenz aus den Bildspeichern 16, 17 ausgelesen werden. Die Filterschaltung 15 teilt die Halbbilder A und B in ihre hochfrequenten und niederfrequenten Anteile Ah, Bh bzw. At, Bt auf. Die hochfrequenten Anteile Ah, Bh werden dann dem ersten Prozessor 2 und die niederfrequenten Anteile At, Bt dem zweiten Prozessor 3 zugeführt, wo sie entsprechend einem der oben beschriebenen Interpolationsverfahren mit Hilfe von Bewegungsvektoren BV verarbeite werden und anschließend in der Mischereinrichtung 4 wieder zusammengeführt werden, um mit der doppelten Vertikalfrequenz wiedergegeben werden zu können.

Sowohl bei der Schaltungsanordnung gemäß Figur 5 als auch bei der gemäß Figur 6 ist zusätzlich jeweils ein Bewegungsdetektor 10 bzw. 20 vorhanden, der mit denselben Eingangssignalen der jeweiligen Bewegungsschätzer 8 bzw. 18 beaufschlagt wird und dessen Ausgangssignale jeweils einer Filteransteuerschaltung 11 zugeführt werden, die die Filterschaltung 5 bzw. 15 ansteuert. Durch diese Maßnahme ist eine bewegungsadaptive Grenzfrequenzumsteuerung im Falle des Versagens der Bewegungsschätzung möglich, wodurch eine weitere Verbesserung der Rückfallqualität der verwendeten Interpolationsverfahren erzielt wird.

## Patentansprüche

1. Verfahren zur Flimmerreduktion bei einem Fernsehempfänger mit den Merkmalen:

   - ein empfangenes Fernsehsignal (Se) weist Halbbilder (A1, B1) auf,
   - das Fernsehsignal (Se) wird durch ein räumlich wirkendes Filter (1; 5; 15) in seine in bezug auf die Ortsfrequenz hochfrequenten und niederfrequenten Signalanteile (Ah, Bh, At, Bt; HA, TA) aufgeteilt,
   - es wird ein Bewegungsvektor (BV) zwischen den Halbbildern (A1, B1) ermittelt,
   - unter Verwendung des Bewegungsvektors (BV) werden die hochfrequenten Signalanteile (Ah, Bh; HA) zu einer flimmerfreien Halbbildwiedergabefolge verarbeitet, die niederfrequenten Signalanteile (At, Bt; TA) zu einer bewegungsrichtigen Halbbildwiedergabefolge,
   - die verarbeiteten Halbbilder werden wieder zusammengefaßt,
   - die zusammengefaßten Halbbilder werden mit doppelter Vertikalfrequenz nach dem Zeilensprungverfahren wiedergegeben,

   **dadurch gekennzeichnet**, daß der Bildinhalt mindestens eines der Halbbilder mit den hochfrequenten und niederfrequenten Signalanteile um einen vom Bewegungsvektor (BV) abgeleiteten Vektor ($\Delta$x, $\Delta$x/2) in Abhängigkeit vom Wiedergabezeitpunkt verschoben wird.

2. Verfahren nach Anspruch 1,
   **dadurch gekennzeichnet**, daß die Halbbilder mindestens ein erstes und ein zweites Halbbild (A1, B1) umfassen, daß die Halbbildwiedergabefolge der hochfrequenten Signalanteile den jeweiligen hochfrequenten Signalanteil umfaßt:

   - des ersten Halbbilds (A1(x)),
   - des zweiten Halbbilds, dessen Bildinhalt um den halbierten Bewegungsvektor entgegen der Bewegungsrichtung verschoben ist (B1(x+$\Delta$x/2)),
   - des ersten Halbbilds, dessen Bildinhalt um den Bewegungsvektor in Bewegungsrichtung verschoben ist (A1(x-$\Delta$x)),
   - des zweiten Halbbilds, dessen Bildinhalt um den halbierten Bewegungsvektor in Bewegungsrichtung verschoben ist (B1(x-$\Delta$x/2)).

3. Verfahren nach Anspruch 2,
   **dadurch gekennzeichnet**, daß die Halbbildwiedergabefolge der niederfrequenten Signalanteile den jeweiligen niederfrequenten Signalanteil umfaßt:

- des ersten Halbbilds (A1(x)),
- des Mittelwerts aus dem ersten Halbbild, dessen Bildinhalt um den halbierten Bewegungsvektor in Bewegungsrichtung verschoben ist, und dem zweiten Halbbild, dessen Bildinhalt um den halbierten Bewegungsvektor entgegen der Bewegungsrichtung verschoben ist (1/2(A1(x-$\Delta$x/2)+B1(x+$\Delta$x/2))),
- des zweiten Halbbilds, dessen Bildinhalt an die Rasterlage des ersten Halbbilds versetzt ist (B1i(x)),
- des Mittelwerts aus dem zweiten Halbbild, dessen Bildinhalt um den halbierten Bewegungsvektor in Bewegungsrichtung verschoben ist, und einem dem zweiten Halbbild nachfolgenden weiteren ersten Halbbilds, dessen Bildinhalt um den halbierten Bewegungsvektor entgegender Bewegungsrichtung verschoben ist (1/2(B1(x-$\Delta$x/2)+A2(x+$\Delta$x/2))).

4. Verfahren nach Anspruch 2,
**dadurch gekennzeichnet**, daß die Halbbildwiedergabefolge der niederfrequenten Signalanteile den jeweiligen niederfrequenten Signalanteil umfaßt:

- des ersten Halbbilds (A1(x)),
- des ersten Halbbilds, dessen Bildinhalt um den halbierten Bewegungsvektor in Bewegungsrichtung verschoben ist (A1(x-$\Delta$x/2)),
- des zweiten Halbbilds, dessen Bildinhalt an die Rasterlage des ersten Halbbilds versetzt ist (B1i(x)),
- des zweiten Halbbilds, dessen Bildinhalt um den halbierten Bewegungsvektor in Bewegungsrichtung verschoben ist (B1(x-$\Delta$x/2)).

5. Verfahren nach Anspruch 4,
**dadurch gekennzeichnet**, daß die Bildzeilen der Halbbilder durch Interpolation benachbarter Bildzeilen gewonnen werden.

6. Verfahren nach einem der Ansprüche 2 bis 5,
**dadurch gekennzeichnet**, daß beim Versagen der Ermittlung des Bewegungsvektors der Bewegungsvektor zum Nullvektor gesetzt wird und der Bildinhalt diejenigen ersten Halbbilder, deren Verschiebungsvektor zum Nullvektor gesetzt ist, in die Rasterlage der zweiten Halbbilder versetzt wird.

7. Verfahren nach einem der Ansprüche 1 bis 6,
**dadurch gekennzeichnet**, daß die hochfrequenten Anteile (HA) und die niederfrequenten Anteile (TA) des Fernsehsignals (Se) in einem Bildspeicher (6, 7) zwischengespeichert werden.

8. Verfahren nach einem der Ansprüche 1 bis 6,
**dadurch gekennzeichnet**, daß die Halbbilder (A, B) des Fernsehsignals (Se) in einem Bildspeicher (16, 17) zwischengespeichert werden.

9. Verfahren nach einem der Ansprüche 1 bis 8,
**dadurch gekennzeichnet**, daß Bewegungsvektoren (BV) durch einen im Fernsehempfänger enthaltenen Bewegungsschätzer (1; 8; 18) ermittelt werden oder als zusätzliche Signale (DATV) mit dem Fernsehsignal (Se) empfangbar sind.

10. Verfahren nach einem der Ansprüche 1 bis 9, bei dem die Grenzfrequenz des räumlich wirkenden Filters (1; 5; 15) von einem Bewegungsdetektor (10, 20) mittels einer Filteransteuerschaltung (11) adaptiv verändert wird.

11. Schaltungsanordnung zur Durchführung eines Verfahren nach einem der Ansprüche 1 bis 10,

mit einer Speicher- und Filtereinrichtung (1), die einen Eingang, dem ein Fernsehsignal (Se) zuführbar ist, und fünf Ausgänge aufweist, wobei die Filtereinrichtung zum Aufteilen des Fernsehsignals (Se) in seine hochfrequenten und niedrigfrequenten Anteile dient, mit einem ersten Prozessor (2) zum Verarbeiten der hochfrequenten Signalanteile (Ah, Bh, HA) der Halbbilder (A, B) des Fernsehsignals (Se) zu einer flimmerfreien Halbbildwiedergabefolge, der drei Eingänge und einen Ausgang aufweist, mit einem zweiten Prozessor (3) zum Verarbeiten der niederfrequenten Signalanteile (At, Bt; TA) der Halbbilder (A, B) des Fernsehsignals (Se) zu einer bewegungsrichtigen Halbbildwiedergabefolge, der drei Eingänge und einen Ausgang aufweist, mit einer Mischereinrichtung (4) zur Zusammenführung der von den Prozessoren (2, 3) verarbeiteten hochfrequenten und niederfrequenten Signalanteile, die zwei Eingänge und einen Ausgang aufweist, mit einer Vektornachverarbeitungsschaltung (9) zur Ermittlung von Bewegungsvektoren (BV) aus mit dem Fernsehsignal (Se) empfangbaren zusätzlichen Signalen (DATV), die einen Eingang und einen Ausgang aufweist, und mit einem Schalter (12), der zwei Eingänge und einen Ausgang aufweist, wobei am Eingang der Speicher- und Filtereinrichtung (1) das Fernsehsignal (Se) anliegt, wobei der erste und zweite Ausgang der Speicher- und Filtereinrichtung (1) mit dem ersten und dem zweiten Eingang des ersten Prozessors (2) verbunden sind, wobei der dirtte und der vierte Ausgang der Speicher- und Filtereinrichtung (1) mit dem ersten und dem zweiten Eingang des zweiten Prozessors (3) verbunden sind,

wobei der fünfte Ausgang der Speicher- und Filtereinrichtung (1) mit dem ersten Eingang des Schalters (12) verbunden ist,

wobei am Eingang der Vektornachverarbeitungsschaltung (9) die eventuell zu empfangenden zusätzlichen Signale (DATV) anliegen,

wobei der Ausgang der Vektornachverarbeitunghsschaltung (9) mit dem zweiten Eingang des Schalters (12) verbunden ist,

wobei der Ausgang des Schalters (12) mit den jeweils dritten Eingängen des ersten Prozessors (2) und des zweiten Prozessors (3) verbunden ist,

wobei der Ausgang des ersten Prozessors (2) mit dem ersten Eingang und der Ausgang des zweiten Prozessors (3) mit dem zweiten Eingang der Mischereinrichtung (4) verbunden ist und

wobei am Ausgang der Mischereinrichtung (4) das Ausgangssignal (Sa) bei der doppelten Vertikalfrequenz abgreifbar ist.

12. Schaltungsanordnung nach Anspruch 11,

bei der die Speicher- und Filtereinrichtung (1) mit einer Filterschaltung (5), die einen Eingang und zwei Ausgänge aufweist, mit einem ersten Bildspeicher (6) und mit einem zweiten Bildspeicher (7), die jeweils einen Eingang und einen Ausgang aufweisen, und

mit einem Bewegungsschätzer (8), der vier Eingänge und einen Ausgang aufweist, gebildet ist und

bei der die Mischereinrichtung (4) mit einem Addierer (14), der zwei Eingänge und einen Ausgang aufweist und

mit einem dritten Bildspeicher (24), der einen Eingang und einen Ausgang aufweist, gebildet ist,

wobei der Eingang der Filterschaltung (5) den Eingang der Speicher- und Filtereinrichtung (1) bildet,

wobei der erste Ausgang der Filterschaltung (5) mit dem Eingang des ersten Bildspeichers (6) verbunden ist,

wobei der zweite Ausgang der Filterschaltung (5) mit dem Eingang des zweiten Bildspeichers (7) verbunden ist,

wobei die Ausgänge der Filterschaltung (5) und des ersten und zweiten Bildspeichers (6, 7) die ersten vier Ausgänge der Speicher- und Filtereinrichtung (1) bilden und mit den vier Eingängen des Bewegungsschätzers (8) verbunden sind,

wobei der Ausgang des Bewegungsschätzers (8) den fünften Ausgang der Speicher- und Filtereinrichtung (1) bildet,

wobei die beiden Eingänge des Addierers (14) die Eingänge der Mischereinrichtung (4) bilden,

wobei der Ausgang des Addierers (14) mit dem Eingang des dritten Bildspeichers (24) verbunden ist und

wobei der Ausgang des dritten Bildspeichers (24) den Ausgang der Mischereinrichtung (4) bildet.

13. Schaltungsanordnung nach Anspruch 11,

bei der die Speicher- und Filtereinrichtung (1) mit einem ersten Bildspeicher (16) und mit einem zweiten Bildspeicher (17), die jeweils einen Eingang und einen Ausgang aufweisen, mit einer Filterschaltung (15), die zwei Eingänge und vier Ausgänge aufweist und mit einem Bewegungsschätzer (18), der zwei Eingänge und einen Ausgang aufweist, gebildet ist,

wobei der Eingang des ersten Bildspeichers (16) und der Eingang des zweiten Bildspeichers (17) miteinander verbunden sind und den Eingang der Speicher- und Filtereinrichtung (1) bilden,

wobei der Ausgang des ersten Bildspeichers (16) mit dem ersten Eingang der Filterschaltung (15) und mit dem ersten Eingang des Bewegungsschätzers (18) verbunden ist,

wobei der Ausgang des zweiten Bildspeichers (17) mit dem zweiten Eingang der Filterschaltung (15) und mit dem zweiten Eingang des Bewegungsschätzers (18) verbunden ist,

wobei die vier Ausgänge der Filterschaltung (15) die ersten vier Ausgänge der Speicher- und Filtereinrichtung (1) bilden und

wobei der Ausgang des Bewegungsschätzers (18) den fünften Ausgang der Speicher- und Filtereinrichtung (1) bildet.

14. Schaltungsanordnung nach Anspruch 12,

die zusätzlich mit einem Bewegungsdetektor (10), der vier Eingänge und einen Ausgang aufweist und mit einer Filteransteuerschaltung (11), die einen Eingang und einen Ausgang aufweist, gebildet ist,

wobei die vier Eingänge des Bewegungsdetektors (10) mit den vier Eingängen des Bewegungsschätzers (8) verbunden sind,

wobei der Eingang der Filteransteuerschaltung (11) mit dem Ausgang des Bewegungsdetektors (10) verbunden ist, und

wobei der Ausgang der Filteransteuerschaltung (11) mit einem zweiten, zusätzlichen Eingang der Filterschaltung (5) verbunden ist.

15. Schaltungsanordnung nach Anspruch 13,

die zusätzlich mit einem Bewegungsdetektor (20), der zwei Eingänge und einen Ausgang aufweist und mit einer Filteransteuerschaltung (11), die einen Eingang und einen Ausgang aufweist, gebildet ist,

wobei die zwei Eingänge des Bewegungsdetektors (20) mit den zwei Eingängen des Bewegungsschätzers (18) verbunden sind,

wobei der Eingang der Filteransteuerschaltung (11) mit dem Ausgang des Bewegungsdetektors (20) verbunden ist, und

wobei der Ausgang der Filteransteuerschaltung (11) mit einem zweiten, zusätzlichen Eingang der Filterschaltung (15) verbunden ist.

## Claims

1. Method for the reduction of flicker in a television receiver having the features:

   - a received television signal (Se) has fields (A1, B1),
   - the television signal (Se) is split by a filter (1; 5; 15) acting in the space domain into its high frequency and low frequency (with regard to the spatial frequency) signal components (Ah, Bh, At, Bt; AH, TA),
   - a motion vector (BV) between the fields (A1, B1) is determined,
   - using the motion vector (BV), the high frequency signal components (Ah, Bh; HA) are processed to form a flicker-free field reproduction sequence and the low frequency signal components (At, Bt; TA) are processed to form a field reproduction sequence which is correct in terms of motion,
   - the processed fields are recombined,
   - the combined fields are reproduced at a doubled vertical frequency in accordance with the line interlacing method,

   characterized in that the picture contents of at least one of the fields having the high frequency and low frequency signal components are shifted by a vector ($\Delta x$, $\Delta x/2$), which is derived from the motion vector (BV), as a function of the reproduction instant.

2. Method according to Claim 1, characterized in that the fields comprise at least one first and one second field (A1, B1), and in that the field reproduction sequence of the high frequency signal components comprises the respective high frequency signal component:

   - of the first field (A1(x)),
   - of the second field, the picture contents of which are shifted (B1(x+$\Delta x/2$)) counter to the direction of movement by half the motion vector,
   - of the first field, the picture contents of which are shifted (A1(x-$\Delta x$)) in the direction of movement by the motion vector,
   - of the second field, the picture contents of which are shifted (B1(x-$\Delta x/2$)) in the direction of movement by half the motion vector.

3. Method according to Claim 2, characterized in that the field reproduction sequence of the low frequency signal components comprises the respective low frequency signal component:

   - of the first field (A1(x)),
   - of the average of the first field, the picture contents of which are shifted in the direction of movement by half the motion vector, and the second field, the picture contents of which are shifted (1/2(A1(x-$\Delta x/2$)-+B1(x+$\Delta x/2$))) counter to the direction of movement by half the motion vector,
   - of the second field, the picture contents of which are offset (B1i(x)) to the raster position of the first field,
   - of the average of the second field, the picture contents of which are shifted in the direction of movement by half the motion vector, and a further first field, which follows the second field and the picture contents of which are shifted (1/2(B1(x-$\Delta x/2$)+A2(x+$\Delta x/2$))) counter to the direction of movement by half the motion vector.

4. Method according to Claim 2, characterized in that the field reproduction sequence of the low frequency signal components comprises the respective low frequency signal component:

   - of the first field (A1(x)),
   - of the first field, the picture contents of which are shifted (A1(x-$\Delta x/2$)) in the direction of movement by half the motion vector,
   - of the second field, the picture contents of which are offset (B1i(x)) to the raster position of the first field,
   - of the second field, the picture contents of which are shifted (B1(x-$\Delta x/2$)) in the direction of movement by half the motion vector.

5. Method according to Claim 4, characterized in that the scanning lines of the fields are obtained by interpolation of adjacent scanning lines.

6. Method according to one of Claims 2 to 5, characterized in that, in the event of failure of the determination of the motion vector, the motion vector is set to the zero vector and the picture contents of those first fields whose shift vector is set to the zero vector are displaced to the raster position of the second fields.

7. Method according to one of Claims 1 to 6, characterized in that the high frequency components (HA) and the low frequency components (TA) of the television signal (Se) are buffered in a frame store (6, 7).

8. Method according to one of Claims 1 to 6, characterized in that the fields (A, B) of the television signal (Se) are buffered in a frame store (16, 17).

9. Method according to one of Claims 1 to 8, characterized in that motion vectors (BV) are determined by a motion estimator (1; 8; 18) contained in the television receiver or can be received as additional signals (DATV) together with the television signal (Se).

10. Method according to one of Claims 1 to 9, in which the cut-off frequency of the filter (1; 5; 15) acting in the space domain is adaptively altered, by means of a filter driving circuit (11), by a motion detector (10, 20).

11. Circuit arrangement for carrying out a method according to one of Claims 1 to 10,

   having one memory and filter device (1), which has an input to which a television signal (Se) can be fed and five outputs, the filter device being used for splitting the television signal (Se) into its high frequency and low frequency components,
   having a first processor (2) for processing the high frequency signal components (Ah, Bh, HA) of the fields (A, B) of the television signal (Se) to form a flicker-free field reproduction sequence, which processor has three inputs and one output,
   having a second processor (3) for processing the low frequency signal components (At, Bt; TA) of the fields (A, B) of the television signal (Se) to form a field reproduction sequence which is correct in terms of motion, which processor has three inputs and one output,
   having a mixer device (4) for bringing together the high frequency and low frequency signal components processed by the processors (2, 3), which mixer device has two inputs and one output,
   having a vector post-processing circuit (9) for determining motion vectors (BV) from additional signals (DATV) which can be received with the television signal (Se), which circuit has one input and one output, and
   having a switch (12) which has two inputs and one output, the television signal (Se) being present at the input of the memory and filter device (1),
   the first and the second output of the memory and filter device (1) being connected to the first and to the second input of the first processor (2),
   the third and the fourth output of the memory and filter device (1) being connected to the first and to the second input of the second processor (3),
   the fifth output of the memory and filter device (1) being connected to the first input of the switch (12),
   the additional signals (DATV) which can possibly be received being present at the input of the vector post-processing circuit (9),
   the output of the vector post-processing circuit (9) being connected to the second input of the switch (12),
   the output of the switch (12) being connected to the respective third inputs of the first processor (2) and of the second processor (3),
   the output of the first processor (2) being connected to the first input and the output of the second processor (3) being connected to the second input of the mixer device (4), and
   it being possible to pick off the output signal (Sa), in the case of the doubled vertical frequency, at the output of the mixer device (4).

12. circuit arrangement according to Claim 11,

   in which the memory and filter device (1) is formed by a filter circuit (5), which has one input and two outputs, by a first frame store (6) and by a second frame store (7), which each have one input and one output, and by a motion estimator (8), which has four inputs and one output, and
   in which the mixer device (4) is formed by an adder (14), which has two inputs and one output, and by a third frame store (24), which has one input and one output,
   the input of the filter circuit (5) forming the input of the memory and filter device (1),
   the first output of the filter circuit (5) being connected to the input of the first frame store (6),
   the second output of the filter circuit (5) being connected to the input of the second frame store (7),
   the outputs of the filter circuit (5) and of the first and of the second frame store (6, 7) forming the first four outputs of the memory and filter device (1) and being connected to the four inputs of the motion estimator (8),
   the output of the motion estimator (8) forming the fifth output of the memory and filter device (1),

the two inputs of the adder (14) forming the inputs of the mixer device (4),

the output of the adder (14) being connected to the input of the third frame store (24), and the output of the third frame store (24) forming the output of the mixer device (4).

**13.** Circuit arrangement according to Claim 11,

in which the memory and filter device (1) is formed by a first frame store (16) and by a second frame store (17), which each have one input and one output, by a filter circuit (15), which has two inputs and four outputs, and by a motion estimator (18), which has two inputs and one output,

the input of the first frame store (16) and the input of the second frame store (17) being connected to one another and forming the input of the memory and filter device (1),

the output of the first frame store (16) being connected to the first input of the filter circuit (15) and to the first input of the motion estimator (18),

the output of the second frame store (17) being connected to the second input of the filter circuit (15) and to the second input of the motion estimator (18),

the four outputs of the filter circuit (15) forming the first four outputs of the memory and filter device (1), and

the output of the motion estimator (18) forming the fifth output of the memory and filter device (1).

**14.** Circuit arrangement according to claim 12,

which is additionally formed by a motion detector (10), which has four inputs and one output, and by a filter driving circuit (11), which has one input and one output,

the four inputs of the motion detector (10) being connected to the four inputs of the motion estimator (8),

the input of the filter driving circuit (11) being connected to the output of the motion detector (10), and

the output of the filter driving circuit (11) being connected to a second, additional input of the filter circuit (5).

**15.** Circuit arrangement according to Claim 13,

which is additionally formed by a motion detector (20),

which has two inputs and one output, and by a filter driving circuit (11), which has one input and one output, the two inputs of the motion detector (20) being connected to the two inputs of the motion estimator (18),

the input of the filter driving circuit (11) being connected to the output of the motion detector (20), and

the output of the filter driving circuit (11) being connected to a second, additional input of the filter circuit (15).

## Revendications

**1.** Procédé de réduction de scintillation dans un récepteur de télévision, présentant les caractéristiques suivantes :

- un signal de télévision reçu (Se) comporte des trames (A1, B1),
- on sépare le signal de télévision (Se) par un filtre à action spatiale (1;5;15) en ses composantes (Ah,Bh,At,Bt; HA,TA) à hautes fréquences et à basses fréquences par rapport à la fréquence locale,
- on détermine un vecteur de déplacement (BV) entre les trames (A1,B1),
- on traite les composantes à hautes fréquences (Ah,Bh; HA) du signal en utilisant le vecteur de déplacement (BV) pour former une suite de reproductions de trames sans scintillation, et on traite les composantes à basses fréquences (At,Bt; TA) du signal pour former une suite de reproductions de trames, correcte du point de vue du déplacement,
- on rassemble à nouveau les trames traitées,
- on reproduit les trames rassemblées avec une fréquence verticale double, selon le procédé de balayage entrelacé,

caractérisé par le fait qu'on décale le contenu d'au moins l'une des trames comportant les composantes à hautes fréquences et à basses fréquences du signal, d'un vecteur ($\Delta x$, $\Delta x/2$), obtenu à partir du vecteur de déplacement (BV), en fonction de l'instant de reproduction.

**2.** Procédé suivant la revendication 1, caractérisé par le fait que les trames comprennent au moins des première et seconde trames (A1,B1), que la suite de reproductions de trames des composantes à hautes fréquences du signal comprend la composante respective à hautes fréquences du signal :

- de la première trame (A1(x)),
- de la seconde trame, dont le contenu est décalé de la moitié du vecteur de déplacement en sens opposé au sens de déplacement (B1(x+$\Delta x/2$)),
- de la première trame, dont le contenu est décalé du vecteur de déplacement dans le sens de déplacement (A1(x-Δx)),

- de la seconde trame, dont le contenu est décalé de la moitié du vecteur de déplacement dans le sens de déplacement (B1(x-Δx/2)).

**3.** Procédé suivant la revendication 2, caractérisé par le fait que la suite de reproductions de trames des composantes à basses fréquences du signal comprend la composante respective à basses fréquences du signal :

- de la première trame (A1(x)),
- de la valeur moyenne de la première trame, dont le contenu est décalé de la moitié du vecteur de déplacement dans la direction de déplacement, et de la seconde trame, dont le contenu est décalé de la moitié du vecteur de déplacement en sens opposé au sens de déplacement (1/2(A1(x-Δx/2) +B1(x+Δx/2))),
- de la seconde trame, dont le contenu est décalé à la position de la première trame (B1i(x)),
- de la valeur moyenne de la seconde trame, dont le contenu est décalé de la moitié du vecteur de déplacement dans le sens de déplacement, et d'une autre première trame, qui succède à la seconde trame et dont le contenu est décalé de la moitié du vecteur de déplacement en sens opposé au sens de déplacement (1/2 (B1(x-Δx/2)+A2(x+Δx/2))).

**4.** Procédé suivant la revendication 2, caractérisé par le fait que la suite de reproductions de trames des composantes à basses fréquences du signal comprend la composante respective à basses fréquences du signal :

- de la première trame (A1(x)),
- de la première trame, dont le contenu est décalé de la moitié du vecteur de déplacement dans le sens de déplacement (A1(x-Δx/2)),
- de la seconde trame, dont le contenu est décalé à la position de la première trame (B1i(x)),
- de la seconde trame, dont le contenu est décalé de la moitié du vecteur de déplacement dans la direction de déplacement (B1(x-Δx/2)).

**5.** Procédé suivant la revendication 4, caractérisé par le fait que l'on obtient les lignes d'image des trames par interpolation de lignes d'image voisines.

**6.** Procédé suivant l'une des revendications 2 à 5, caractérisé par le fait que dans le cas où la détermination du vecteur de déplacement ne peut être réalisée, on positionne le vecteur de déplacement sur le vecteur nul et on amène le contenu d'image des premières trames, dont le vecteur de déplacement est positionné sur le vecteur nul, dans la position des secondes trames.

**7.** Procédé suivant l'une des revendications 1 à 6, caractérisé par le fait que l'on mémorise temporairement les composantes à hautes fréquences (HA) et les composantes à basses fréquences (TA) du signal de télévision (Se) dans une mémoire d'images (6,7).

**8.** Procédé suivant l'une des revendications 1 à 6, caractérisé par le fait que l'on mémorise temporairement les trames (A,B) du signal de télévision (Se) dans une mémoire d'images (16,17).

**9.** Procédé suivant l'une des revendications 1 à 8, caractérisé par le fait que l'on détermine des vecteurs de déplacement (BV) par un dispositif (1;8;18) d'estimation de déplacement, qui se trouve dans le récepteur de télévision, ou on peut les recevoir sous la forme de signaux supplémentaires (DATV) avec le signal de télévision (Se).

**10.** Procédé suivant l'une des revendications 1 à 9, selon lequel on modifie de manière adaptative la fréquence limite du filtre à action spatiale (1;5;15) par un détecteur de déplacement (10,20), au moyen d'un circuit de commande de filtre (11).

**11.** Montage pour la mise en oeuvre du procédé suivant l'une des revendications 1 à 10, comportant

    un dispositif de mémoire et de filtre (1), qui comporte une entrée, à laquelle un signal de division (Se) peut être envoyé, et cinq sorties, le dispositif de filtre servant à séparer le signal de télévision (Se) en ses composantes à hautes fréquences et à basses fréquences,
    un premier processeur (2) destiné à traiter les composantes à hautes fréquences (Ah,Bh,HA) des trames (A,B) du signal de télévision (Se) pour former une suite de reproductions de trames sans scintillation, et qui comporte trois entrées et une sortie,
    un second processeur (3) destiné à traiter les composantes à basses fréquences (At,Bt;TA) des trames (A,B) du signal de télévision (Se) pour former une suite de répétitions de trames, correctes du point de vue du déplacement, et qui comprend trois entrées et une sortie,
    un dispositif mélangeur (4) destiné à rassembler les composantes à hautes fréquences et à basses fréquences du signal, qui sont traitées par les processeurs (2,3), et qui comporte deux entrées et une sortie,
    un circuit de post-traitement vectoriel (9) destiné à la détermination de vecteurs de déplacement (BV) à partir de signaux supplémentaires (DATV), qui peuvent être reçus avec le signal de télévision (Se), et qui comporte une entrée et une sortie, et

un commutateur (12), qui comporte deux entrées et une sortie, et dans lequel

le signal de télévision (Se) est appliqué à l'entrée du dispositif de mémoire et de filtre (1),

les première et seconde sorties du dispositif de mémoire et de filtre (1) sont reliées aux première et seconde entrées du premier processeur (2),

les troisième et quatrième sorties du dispositif de mémoire et de filtre (1) sont reliées aux première et seconde entrées du second processeur (3),

la cinquième sortie du dispositif de mémoire et de filtre (1) est reliée à la première entrée du commutateur (12),

les signaux supplémentaires (DATV), qui doivent être éventuellement reçus, sont appliqués à l'entrée du circuit de post-traitement vectoriel (9),

la sortie du circuit de post-traitement vectoriel (9) est reliée à la seconde entrée du commutateur (12),

la sortie du commutateur (12) est reliée aux troisièmes entrées respectives du premier processeur (2) et du second processeur (3),

la sortie du premier processeur (2) est reliée à la première entrée et la sortie du second processeur (3) est reliée à la seconde entrée du dispositif mélangeur (4), et

le signal de sortie (Sa) peut être prélevé, à la fréquence double de la fréquence verticale, à la sortie du dispositif mélangeur (4).

12. Montage suivant la revendication 11,

dans lequel le dispositif de mémoire et de filtre (1) est formé d'un circuit de filtre (5), qui a une entrée et deux sorties, d'une première mémoire d'images (6) et d'une seconde mémoire d'images (7), qui ont chacune une entrée et une sortie, et

d'un dispositif (8) d'estimation de déplacement, qui comporte quatre entrées et une sortie, et dans lequel le dispositif mélangeur (4) est formé d'un additionneur (4), qui a deux entrées et une sortie, et d'une troisième mémoire d'images (24), qui a une entrée et une sortie, et dans lequel

l'entrée du circuit de filtre (5) forme l'entrée du dispositif de mémoire et de filtre (1),

la première sortie du circuit de filtre (5) est reliée à l'entrée de la première mémoire d'images (6),

la seconde sortie du circuit de filtre (5) est reliée à l'entrée de la seconde mémoire d'images (7),

les sorties du circuit de filtre (5) et des première et seconde mémoires d'images (6,7) forment les quatre premières sorties du dispositif de mémoire et de filtre (1) et sont reliées aux quatre entrées du dispositif (8) d'estimation de déplacement,

la sortie du dispositif (8) d'estimation du déplacement forme la cinquième sortie du dispositif de mémoire et de filtre (1),

les deux entrées de l'additionneur (14) forment les entrées du dispositif mélangeur (4),

la sortie de l'additionneur (14) est reliée à l'entrée de la troisième mémoire d'images (24), et

la sortie de la troisième mémoire d'images (24) forme la sortie du dispositif mélangeur (4).

13. Montage suivant la revendication 11,

dans lequel le dispositif de mémoire et de filtre (1) est formé d'une première mémoire d'images (16) et d'une seconde mémoire d'images (17), qui comportent chacune une entrée et une sortie,

d'un circuit de filtre (15), qui comporte deux entrées et quatre sorties, et

d'un dispositif (18) d'estimation de déplacement, qui comporte deux entrées et une sortie, et dans lequel

l'entrée de la première mémoire d'images (16) et l'entrée de la seconde mémoire d'images (17) sont reliées entre elles et forment l'entrée du dispositif de mémoire et de filtre (1),

la sortie de la première mémoire d'images (16) est reliée à la première entrée du circuit de filtre (15) et à la première entrée du dispositif (18) d'estimation de déplacement,

la sortie de la seconde mémoire d'images (17) est reliée à la seconde entrée du circuit de filtre (15) et à la seconde entrée du dispositif (18) d'estimation de déplacement,

les quatre sorties du circuit de filtre (15) forment les quatre premières sorties du dispositif de mémoire et de filtre (1), et

la sortie du dispositif (18) d'estimation de déplacement forme la cinquième sortie du dispositif de mémoire et de filtre (1).

14. Montage suivant la revendication 12,

qui est formé en outre d'un détecteur de déplacement (10), qui comporte quatre entrées et une sortie, et d'un circuit de commande de filtre (11), qui comporte une entrée et une sortie, et dans lequel

les quatre entrées du détecteur de déplacement (10) sont reliées aux quatre entrées du dispositif (8) d'estimation de déplacement, et

l'entrée du circuit de commande de filtre (11) est reliée à la sortie du détecteur de déplacement (10), et

la sortie du circuit de commande de filtre (11) est reliée à une seconde entrée supplémentaire du circuit de filtre (5).

15. Montage suivant la revendication 13,

qui est formé en outre d'un détecteur de déplacement (20), qui comporte deux entrées et une sortie, et d'un circuit de commande de filtre (11), qui comporte une entrée et une sortie, et dans lequel

les deux entrées du détecteur de déplacement (20) sont reliées aux deux entrées du dispositif (18) d'estimation de déplacement,

l'entrée du circuit de commande de filtre (11) est reliée à la sortie du détecteur de déplacement (20), et

la sortie du circuit de commande de filtre (11) est reliée à une seconde entrée supplémentaire du circuit de filtre (15).

# FIG 1

# FIG 2

# FIG 3

FIG 4

FIG 5

FIG 6